# EUROPEAN PATENT APPLICATION

(11) **EP 3 306 550 A1**
(43) Date of publication of application: **11.04.2018**
(21) Application number: 16824222.0
(22) Date of filing: 21.06.2016
(51) Int. Cl.: G06Q 20/40, G06Q 20/24

(54) **DETERMINATION DEVICE, DETERMINATION METHOD, AND DETERMINATION PROGRAM**

(30) Priority: 10.07.2015 JP 2015139091
(71) Applicant: NTT Data Corporation, Tokyo 135-6033 (JP)
(72) Inventor: MIYAKE Shinichiro, Tokyo 135-6033 (JP); MITSUISHI Hirofumi, Tokyo 135-6033 (JP); MIYAMOTO Takuya, Tokyo 135-6033 (JP)
(74) Representative: Brevalex
(86) International application number: PCT/JP2016/068364
(87) International publication number: WO 2017/010242

(57) **Abstract**

A determination device according to one aspect of the present invention includes an acquisition unit configured to acquire credit information on creditability of a merchant store; a storage unit configured to store one or more determination conditions for determining whether it is possible to approve the merchant store as a creditable merchant store suitable for conducting transactions on credit; and a determination unit configured to determine whether the credit information acquired by the acquisition unit satisfies the determination condition stored in the storage unit.

## Description

### TECHNICAL FIELD

Embodiments of the present invention relate to a determination device, a determination method, and a determination program.

Priority is claimed on Japanese Patent Application No. 2015-139091 filed July 10, 2015, the entire content of which is incorporated herein by reference.

### BACKGROUND ART

Acquirers (acquiring banks or payment service providers) perform screenings such as whether an applying merchant is conducting illegal transactions when a new merchant is registered or ongoing monitoring management is performed to existing merchants. With regard to this, a technology for collecting information that may possibly be useful for screening and presenting the information is known (for example, refer to Non-Patent Document 1).

However, the screening of merchant stores described above is performed by a person in charge of the acquirer and the like, and the burden on the person in charge tends to increase as the number of merchant stores subject to screening increases.

### [Document of the Prior Art]

### [Non Patent Document]

### [Non Patent Document 1]

Anomaly detection in merchants with big data, and "rumor" displayed on dashboard, Nikkei Information Strategy 2015/04 (published on pages 58 to 59)

### SUMMARY OF INVENTION

### [Problems to be Solved by the Invention]

The present invention is made in view of the above circumstances, and an object of the present invention is to provide a determination device, a determination method, and a determination program which can reduce the burden on a person in charge of performing a screening of a merchant store.

### [Means for Solving the Problems]

To solve the problems described above, a determination device according to one aspect of the present invention includes an acquisition unit configured to acquire information for screening (hereinafter, referred to as "screening information") on creditability of a merchant store; a storage unit configured to store one or more determination conditions for determining whether it is possible to approve the merchant store as a creditable merchant store suitable for conducting transactions on credit; and a determination unit configured to determine whether the credit information acquired by the acquisition unit satisfies the determination condition stored in the storage unit.

In the determination device according to one aspect of the present invention, the credit information includes at least information on a reputation of the merchant store stored in a storage device connected to a network.

The determination device according to one aspect of the present invention further includes a decision unit configured to decide a timing at which a process of the determination is performed by the determination unit on the basis of a determination result of the determination unit or the credit information, in which the determination unit performs a determination process in accordance with a timing decided by the decision unit.

In the determination device according to one aspect of the present invention, the acquisition unit acquires determination cycle information including a timing at which a process of the determination is performed by the determination unit, the determination unit performs a determination process in accordance with a timing included in determination cycle information acquired by the acquisition unit, and the decision unit decides a timing at which a next determination process is performed by the determination unit on the basis of a determination result of the determination unit or credit information acquired by the acquisition unit. The determination cycle information described above corresponds to a determination period in embodiments.

In the determination device according to one aspect of the present invention, the determination unit determines a degree of the creditability of the merchant store on a basis of the number of pieces of the credit information satisfying the determination conditions.

In the determination device according to one aspect of the present invention, the determination conditions are plural and weighted values are assigned correspondingly to each of the determination conditions, and the determination unit determines a degree of the creditability of the merchant store on a basis of a weighted sum of the weighted values of the determination conditions satisfied by the credit information.

The determination device according to one aspect of the present invention further includes an output unit configured to output a determination result of the determination unit to a terminal device of an acquirer conducting a transaction according to the credit information when the determination unit determines that the credit information does not satisfy the determination conditions. For the output unit described above, a communication interface and an output control unit in embodiments can be used.

A determination method according to another aspect of the present invention includes acquiring credit information concerning creditability of a merchant store; storing, in a storage unit, one or more determination conditions for determining whether it is possible to approve the merchant store as a creditable merchant store suitable for conducting transactions on credit; and determining whether the credit information satisfies the determination condition stored in the storage unit.

A determination program according to still another aspect of the present invention causes a computer of the determination device described above to execute a step of acquiring credit information on creditability of a merchant store; a step of storing, in a storage unit, one or more determination conditions for determining whether it is possible to approve the merchant store as a creditable merchant store suitable for conducting transactions on credit; and a step of determining whether the credit information satisfies the determination condition stored in the storage unit.

### [Advantageous Effects of the Invention]

As described above, according to the invention, it is possible to provide a determination device, a determination method, and a determination program which can reduce a burden on the person in charge of performing a screening of a merchant store.

### BRIEF DESCRIPTION OF DRAWINGS

Fig. 1 is a schematic diagram which shows an example of a merchant screening system including a determination device of a first embodiment.
Fig. 2 is a block diagram which shows an example of a functional configuration of the determination device of the first embodiment.
Fig. 3 is a flowchart which shows an example of processing of a control unit of the first embodiment.
Fig. 4 is a flowchart which shows another example of the processing of the control unit of the first embodiment.
Fig. 5 is a block diagram which shows an example of a functional configuration of a determination device of a second embodiment.
Fig. 6 is a table which shows an example of a result of determination performed by a determination unit of a third embodiment.

### EMBODIMENTS FOR CARRYING OUT THE INVENTION

Hereinafter, a determination device, a determination method, and a determination program according to the present embodiment will be described with reference to the drawings.

### (First embodiment)

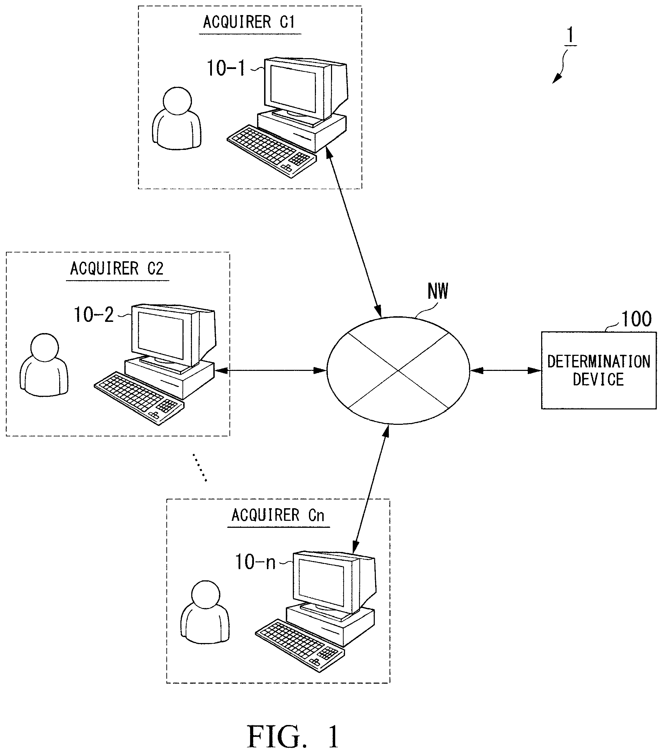

Fig. 1 is a schematic diagram which shows an example of a merchant screening system 1 including a determination device 100 in a first embodiment. The merchant screening system 1 in the present embodiment allows a company dealing with a payment card such as a credit card (hereinafter, referred to as "acquirer") to perform screening such as whether there are illegal transactions in an applying merchant, which desires to newly become a merchant (hereinafter, referred to as a "applying merchant") or an existing merchant, which has already become a merchant (hereinafter, referred to as a "merchant").

The merchant screening system 1 includes, for example, terminal devices 10-1 to 10-n which are managed by acquirers C1 to Cn (n is any natural number), respectively, and a determination device 100. The terminal devices 10-1 t 10-n and the determination device 100 communicate with each other via a network NW such as a local area network (LAN) or a wide area network (WAN).

The terminal devices 10-1 to 10-n are, for example, personal computers, tablet terminal devices, mobile phones, or the like. Persons in charge of performing a screening of the acquirers C1 to Cn, for example, operate each terminal device, and input merchant basic information on the basis of papers or data received from a merchant. The merchant basic information is information on the applying merchant which is subject to screening. The merchant basic information includes information such as a store name, address, a telephone number, a representative name, a mail address, and the number of years since establishment. The terminal devices 10-1 to 10-n which receive an input of the merchant basic information transmit the merchant basic information 132 to the determination device 100 via the network NW.

When the terminal devices 10-1 to 10-n and the acquirers C1 to Cn described above are not particularly distinguished, they are simply referred to as a "terminal device 10" and an "acquirer C". Moreover, the acquirer C in the present embodiment may include an issuer that performs card issuing work separately from an acquirer that performs work such as merchant management, and a payment service provider that acts between an acquirer and a merchant and performs payment work on behalf of the acquirer and the merchant.

The determination device 100 performs various types of determination on the basis of information received from the terminal device 10. Hereinafter, each configuration of the determination device 100 will be described with reference to drawings.

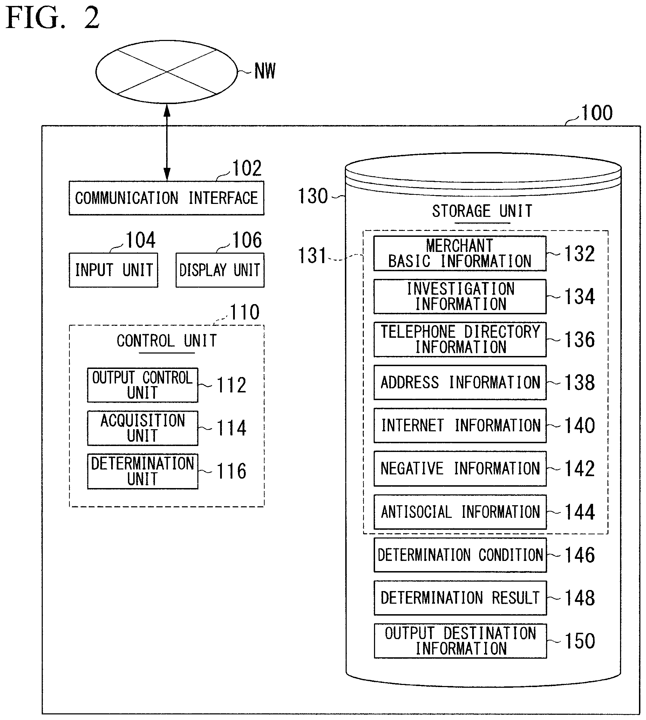

Fig. 2 is a diagram which shows an example of a functional configuration of the determination device 100 of the first embodiment. The determination device 100 includes a communication interface 102, an input unit 104, a display unit 106, a control unit 110, and a storage unit 130.

The communication interface 102 is a communication interface for connecting to the network NW and includes, for example, a network card, and the like. The input unit 104 receives an operation of a user and generates information in accordance with the operation. The input unit 104 is, for example, a touch panel, a keyboard, a mouse, and the like.

The display unit 106 displays an image on the basis of input information. The display unit 106 is a liquid crystal display, an organic electroluminescence (EL) display, and the like. The display unit 106 may be a touch panel having a function of the input unit 104.

The control unit 110 includes an output control unit 112, an acquisition unit 114, and a determination unit 116. A portion or all of the functional units of the control unit 110 described above are software functional units operated by a processor such as a central processing unit (CPU) executing a program stored in the storage unit 130. The program is downloaded from an application server via, for example, the network NW. In addition, a portion or all of the functional units of the control unit 110 may also be a hardware functional unit such as a large scale integration (LSI) or an application specific integrated circuit (ASIC).

The storage unit 130 is realized by a non-volatile storage medium such as a read only memory (ROM), a flash memory, or an SD card, and a volatile storage medium such as a random access memory (RAM) or a register. Information stored in the storage unit 130 includes information such as credit information 131, a determination condition 146, a determination result 148, and output destination information 150 to be described below, in addition to a program executed by a processor. The credit information 131 is information related to a credit (creditability) of a store.

The credit information 131 includes at least one type from merchant basic information 132, investigation information 134, telephone directory information 136, address information 138, internet information 140, negative information 142, and antisocial information 144. The credit information 131 may also include other types of information in addition to the above various types of information. The information included in the credit information 131 is acquired from an external storage device in advance and stored in the storage unit 130. The external storage device is, for example, a server device, a personal computer, or a mobile phone, and may be any device which can store the credit information 131. The credit information 131 is stored in the storage unit 130 using a structure-type database such as NoSQL (Not only Structured Query Language).

### <Determination process at the time of registering a new merchant>

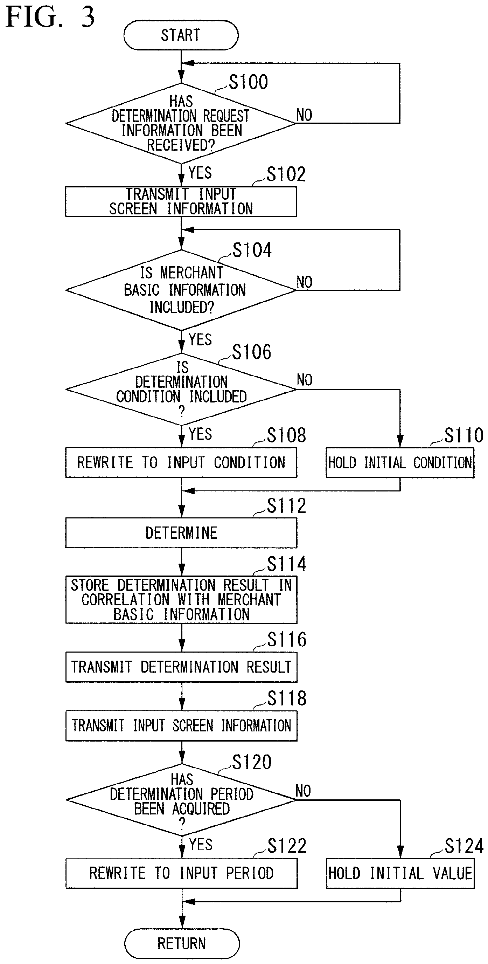

Hereinafter, determination process performed by the control unit 110 at the time of newly registering a merchant will be described according to a flowchart. Fig. 3 is a flowchart which shows an example of a processing flow of the control unit 110 of the first embodiment.

First, the control unit 110 described above determines whether determination request information has been received from the terminal device 10 (step S100). The determination request information is information requested by a person in charge in an acquirer C to determine a credit (creditability) of the applying merchant which is subject to screening. The determination request information is transmitted to the determination device 100 by an input to the terminal device 10 by the person in charge in the acquirer C. When the control unit 110 does not receive determination request information from the terminal device 10 (No: step S100), the control unit 110 waits until the determination request information is received.

On the other hand, when the output control unit 112 in the control unit 110 receives the determination request information from the terminal device 10 (Yes: step S100), the output control unit 112 transmits input screen information for allowing a person in charge to input predetermined information to the terminal device 10 which is a transmission source of the determination request information by controlling the communication interface 102 (step S102). The input screen information includes information for displaying a screen which receives an input of the merchant basic information 132 and information for displaying a screen which receives an input of the determination condition 146 to be referred to at the time of determination.

The determination conditions 146 are conditions for determining whether it is possible to approve the applying merchant which is subject to screening as a store allowed to conduct credit-based transactions. For example, the determination conditions 146 may be conditions for determining whether it is possible to approve an applying merchant as a merchant of the acquirer C. More specifically, the determination conditions 146 includes conditions regarding a management base, conditions regarding a financial performance, conditions regarding information security, conditions regarding business relationship with other companies, conditions regarding handling products and sales methods, and conditions regarding compliance.

The conditions regarding a management base include a condition for determining whether a merchant store (or a company running the merchant store) actually exists, a condition for determining whether there is actual sales activity, a condition for determining a business history, a condition for determining a background of a manager, and a condition for determining a history of administrative measures.

The conditions regarding a financial performance include a condition for determining financial results, a condition for determining financial statements, a condition for determining the investigation information 134 from a credit bureau, and the like. The investigation information 134 includes various types of information such as a store name (or a company name running the store), a company code, performance such as gross sales and ordinary profit, a summary of business, a composition of the distribution of major businesses, a rating by a credit bureau, a representative name (a CEO name), a business history, a head office address, a telephone number, a uniform resource locator (URL), a market name at the time of listing, a securities code, a capital, a capital composition, a transaction bank, the number of employees, suppliers, and customers.

The conditions regarding information security include a condition for determining a management policy of customer information, a condition for determining a situation of security correspondence in terms of a system, and the like.

The conditions regarding business relationship with other companies include a condition for determining a contracts situation with other acquirers.

The conditions regarding handling products and sales methods include a condition for determining types, stocks, prices and the like of handled products (commodities), a condition for determining whether to sell in a real store or to sell on a website, a condition for determining display contents on a website such as whether the display contents are advertised in an exaggerated manner, and the like.

The conditions regarding compliance include a condition for determining whether a business license has been acquired in the case of a business type requiring a business license, a condition for determining whether notation according to the Specified Commercial Transactions Law in Japan (or relevant local regulation in the country) has been implemented, a condition for determining the antisocial information 144, a condition for determining a policy related to money laundering, and the like. The antisocial information 144 is information in which stores or companies grouped with antisocial influences are listed.

The determination conditions 146, in addition to various determination conditions described above, may also include, for example, a condition for determining whether there is negative information 142 in share information registered using a merchant information exchange system by another acquirer C or a condition for determining whether there is bad information or a bad reputation indicating information on inconvenience in the share information or the internet information 140 described above. The negative information 142 is information such as payment delays such as in credit card usage and the like or accident reports such as a request to a lawyer for debt consolidation, and the like. In addition, the internet information 140 is, for example, information on a reputation of a store such as word of mouth communication, comments, or reviews added to a bulletin board and the like on the internet by consumers. The internet information 140 is, for example, extensible markup language (XML) data obtained by making a web page in which the reputation of a store is described into text, performing enriched meaning interpretation on each word or each sentence shown in the text, and tagging with terms and the like indicating an interpreted meaning. Tagging is performed using terms such as dates, place names, business types, people's names, URLs, store names, and text content.

The terminal device 10 displays a screen including an input field of the merchant basic information 132 and an input field of the determination conditions 146 according to the transmission (step S102) of the input screen information by the determination device 100 described above. As a result, a person in charge can input information corresponding to each input field of an input screen displayed on the terminal device 10. The terminal device 10 transmits input information to the determination device 100 if an input is received from the person in charge.

The acquisition unit 114 of the control unit 110 acquires information transmitted by the terminal device 10 which is a transmission destination of the input screen information, and determines whether the merchant basic information 132 is included in the acquired information (step S104). The acquisition unit 114 continues to acquire information until the merchant basic information 132 can be acquired when the merchant basic information 132 is not included in the acquired information (No: step S104).

On the other hand, the acquisition unit 114 determines whether the determination conditions 146 are included in the acquired information (step S106) when the merchant basic information 132 is included in the acquired information (Yes: step S104). When the determination conditions 146 are included in the acquired information (Yes: step S106), initial conditions determined in advance are rewritten in the determination conditions 146 included in the acquired information, that is, the determination conditions 146 input by the person in charge (step S108). The initial conditions are, for example, default conditions set before an operational start of the system by a designer and the like of the system.

On the other hand, the acquisition unit 114 causes the initial conditions to be held in the storage unit 130 as the determination conditions 146 (step S110) when the determination conditions 146 are not included in the acquired information (No: step S106). The control unit 110 may cause a setting history of the determination conditions 146 to be stored in the storage unit 130 for each terminal device 10 and set determination conditions 146 used in the last time as initial conditions of this time. The setting history is a history (log) in which the same conditions as determination conditions 146 used in the past are set by the same or a different terminal device 10 (that is, the person in charge). For example, the setting history stored in the storage unit 130 may be represented by the number of times of use (frequency) of the determination conditions 146. For example, the control unit 110 may set a setting with the highest use frequency in the setting history stored in the storage unit 130 as initial conditions. Accordingly, the determination device 100 can set the initial conditions in consideration of determination conditions 146 set each time by a person in charge of performing a screening. As a result, the determination device 100 can save time and labor for an input by the person in charge of performing a screening.

Next, the determination unit 116 determines whether a credit (creditability) of a store indicated by the merchant basic information 132 is sufficient for a person in charge of operating the terminal device 10 on the basis of the determination conditions 146 and the credit information 131 (step S112). Specifically, the determination unit 116 searches for a store name indicated by the merchant basic information 132 among various types of information (134 to 144) included in the credit information 131, and extracts information correlated to the store name from the storage unit 130. The determination unit 116 determines whether the extracted various types of information match respective conditions included in the determination conditions 146. The determination of whether they are matched or not may be performed by determining whether the various types of information included in the credit information 131 satisfy respective conditions included in the determination conditions 146, and may also be performed by determining whether the various types of information meet respective conditions.

For example, when the determination conditions 146 are conditions for determining the investigation information 134 from a credit bureau, the determination unit 116 refers to a rating by the credit bureau, which is included in the investigation information 134. The determination unit 116 determines that the determination conditions 146 are not matched when a referred to evaluation point is less than a threshold value, and determines that the determination conditions 146 are matched when a referred evaluation point is equal to or greater than a threshold value.

In addition, for example, when the determination conditions 146 are conditions for determining whether a store (or a company running a store) actually exists, the determination unit 116 performs collation between a telephone number and an address included in the merchant basic information 132 and the telephone directory information 136 and the address information 138 stored in the storage unit 130 in advance. When a telephone number and an address of a store included in the merchant basic information 132 are not included in the telephone direction information 136 and the address information 138, the determination unit 116 determines that the store does not actually exist. Moreover, when a telephone number and an address of a store included in the merchant basic information 132 are included in the telephone directory information 136 and the address information 138, the determination unit 116 determines that the store actually exists. The determination unit 116, for example, determines that the determination conditions 146 are matched when a store is determined to actually exist, and determines that the determination conditions 146 are not matched when a store is determined to not actually exist.

Moreover, for example, when the determination conditions 146 are conditions for determining whether there is a notation according to the Specified Commercial Transactions Law (or relevant local regulation), the determination unit 116 determines whether there is a notation according to the Specified Commercial Transactions Law (or relevant local regulation) on a web page which is URL destination. The determination unit 116 determines that the determination conditions 146 are not matched when there is a notation according to the Specified Commercial Transactions Law (or relevant local regulation) on a web page, and determines that the determination conditions 146 are matched when there is no notation according to the Specified Commercial Transactions Law (or relevant local regulation) on a web page.

In addition, for example, when the determination conditions 146 are conditions for determining whether there is bad information or a bad reputation in the internet information 140, the determination unit 116 extracts information tagged with a store name the same as the store name indicated by the merchant basic information 132 from the internet information 140 stored in the storage unit 130. Next, the determination unit 116 determines whether there is bad information or a bad reputation with reference to text content and tagged information in the extracted internet information 140. The determination unit 116 determines that the determination conditions 146 are matched when there is bad information or a bad reputation in the internet information 140, and determines that the determination conditions 146 are not matched when there is no bad information or bad reputation.

The determination unit 116 determines whether each of various types of conditions of the determination conditions 146 is matched as described above, and determines whether a credit (creditability) of a store subject to screening is sufficient on the basis of the number of matched conditions and the number of input fields (the number of items) of the determination conditions 146. In the present embodiment, the determination unit 116 determines a degree of creditability of a store on the basis of the number of matched conditions or the number of unmatched conditions. For example, in a case in which there is a condition for determining the investigation information 134 by a credit bureau and a condition for determining whether a store actually exists, when these two conditions are matched, the determination conditions 146 indicate that the degree of creditability is higher than that when either one of the conditions is matched. In addition, in a case in which there is a condition for determining whether bad information or a bad reputation exists in the internet information 140 and a condition for determining whether a notation according to the Specified Commercial Transactions Law (or relevant local regulation) exists, when these two conditions are matched, the determination conditions 146 indicates that the degree of creditability is lower than that when either one of the conditions is matched.

The determination unit 116 may determine the degree of creditability by combining some or all of the various types of determination conditions described above. For example, the determination unit 116 may determine the degree of creditability using both of the condition for determining whether a store actually exists and the condition for determining whether bad information or a bad reputation exists in the internet information 140. Moreover, the various types of condition of the determination conditions 146 may be set in such a way that the credit (creditability) of a store subject to screening is lowered when these conditions are matched. For example, in the condition for determining the investigation information 134 by a credit bureau, the determination conditions 146 may be set to be matched when an evaluation point included in the investigation information 134 is less than a threshold value, and the determination conditions 146 may be set not to be matched when the evaluation point is equal to or greater than the threshold value. In the same manner, in the condition for determining whether a store actually exists, the determination conditions 146 may be set not to be matched when a store is determined to actually exist, and the determination conditions 146 may be set to be matched when a store is determined not to actually exist. As a result, the determination unit 116 can output a determination result in a direction in which the credit (creditability) of a store subject to screening is lowered as the number of matched determination conditions 146 increases.

On the other hand, the various types of conditions of the determination conditions 146 may also be set in a direction in which the credit (creditability) of a store subject to screening increases when the conditions are matched. For example, in the condition for determining whether bad information or a bad reputation exists in the internet information 140, the determination conditions 146 may be set not to be matched when bad information or a bad reputation exists in the internet information 140, and the determination conditions 146 may be set to be matched when bad information or a bad reputation does not exist therein. In the same manner, in the condition for determining whether a notation according to the Specified Commercial Transactions Law (or relevant local regulation) exists, the determination conditions 146 may be determined to be matched when a notation according to the Specified Commercial Transactions Law (or relevant local regulation) exists on a web page, and the determination conditions 146 may be determined not to be matched when a notation according to the Specified Commercial Transactions Law (or relevant local regulation) does not exist on a web page. As a result, a determination result can be output in a direction in which the credit (creditability) of a store subject to screening increases as the number of matched determination conditions 146 increases.

The determination unit 116 described above, for example, determines that the credit (creditability) of a store subject to screening is not sufficient when the number of matched conditions is equal to or greater than a threshold value, and determines that the credit (creditability) of a store subject to screening is sufficient when the number of matched conditions is less than the threshold value. The determination unit 116 may set the threshold value in accordance with the number of input fields (the number of items) of the determination conditions 146.

In addition, there may be one, or two or more threshold values referred to in order to determine the credit (creditability) of a store described above. For example, when there are a total of two threshold values which are a threshold value Th1 and a threshold value Th2, the determination unit 116 may determine that the credit (creditability) of a store subject to screening is not sufficient when the number of matched conditions is equal to or greater than the threshold value Th1, determine that the credit (creditability) of a store subject to screening is indeterminate when the number of matched conditions is less than the threshold value Th1 and greater than or equal to the threshold value Th2, and determine that the credit (creditability) of a store subject to screening is sufficient when the number of matched conditions is less than the threshold value Th2. "Indeterminate" indicates a state in which the credit (creditability) of a store subject to screening cannot be determined to be sufficient or to be insufficient. Accordingly, the determination device 100 can notify a person in charge of the determination result 148 in which the credit (creditability) of a store subject to examination is determined to be sufficient or the determination result 148 which indicates "indeterminate" when it cannot be determined that the credit (creditability) of a store subject to screening is insufficient and superiority or inferiority cannot be mechanically clarified. As a result, the determination device 100 can prompt a person in charge to make a determination for a store for which superiority or inferiority cannot be determined.

Next, the determination unit 116 causes the determination result 148 to be stored in the storage unit 130 in correlation with merchant basic information indicating a store subject to determination (a store subject to screening) (step S114). Then, the output control unit 112 controls the communication interface 102 such that it transmits the determination result 148 stored in the storage unit 130 to the terminal device 10 which is an acquisition source of the determination conditions 146 (step S116). The determination result 148 may be a result indicating whether the credit (creditability) of a store subject to screening is sufficient, and may be a result indicating whether each of the various types of conditions of the determination conditions 146 is matched. In addition, the output control unit 112 may output the determination result 148 to other devices in addition to the terminal device 10 which is a transmission source of the determination request information. For example, when an output destination of the determination result 148 is registered to be other devices in advance by a person in charge, the output control unit 112 refers to the output destination information 150 which indicates the output destination and causes the determination result 148 to be transmitted to the communication interface 102. The output destination information 150 is, for example, an email address or the like.

Next, the output control unit 112 transmits input screen information for receiving an input of a determination period indicating a timing which triggers repetition of following ongoing monitorings to the terminal device 10 by controlling the communication interface 102 such that it performs ongoing monitoring management (step S118). An input screen for receiving an input of a determination period is displayed on the terminal device 10 which receives the input screen information. As a result, a person in charge can input a determination period according to a screen displayed on the terminal device 10.

Next, the acquisition unit 114 determines whether a determination period has been acquired from the terminal device 10 (step S120). When a determination period has been acquired from the terminal device 10 (Yes in step S120), the acquisition unit 114 rewrites the determination period to the input period (step S 122). On the other hand, when a determination period has not been acquired from the terminal device 10 (No in step S120), the acquisition unit 114 causes an initial value set in advance to be held in the storage unit 130 as a determination period (step S124). The initial value is, as in the initial setting described above, for example, a default value set in advance by a designer of a system before commencement of operation of the system or the like. This ends the process of the present flowchart.

### <Determination process at the time of ongoing monitoring management of merchants>

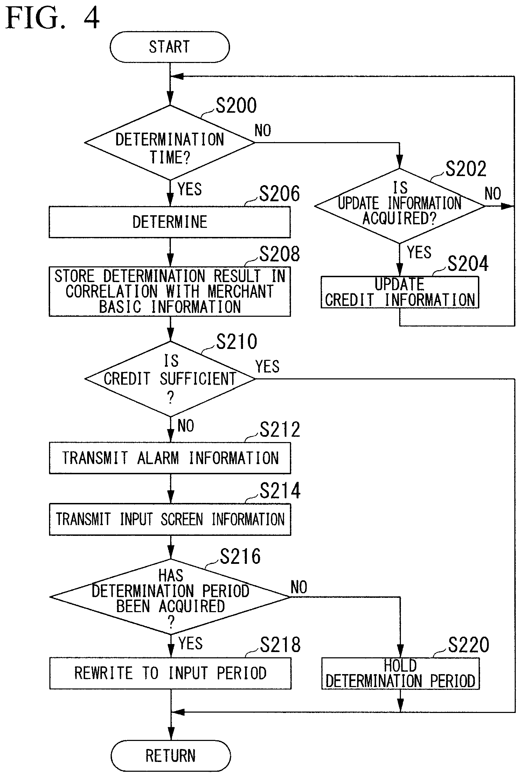

Hereinafter, a determination process performed by the control unit 110 at the time of ongoing monitoring management of merchants will be described according to a flowchart. Fig. 4 is a flowchart which shows another example of a process flow of the control unit 110 according to the first embodiment.

First, the determination unit 116 determines whether current date and time is a time at which a determination process is performed on the basis of the determination period stored in the storage unit 130 and information such as year, month, and date (step S200). When the current date and time is not a time at which a determination process is performed (No in step S200), the determination unit 116 determines whether update information for the credit information 131 currently stored in the storage unit 130 may be acquired (step S202). The update information is information transmitted from an external device when an external device such as an external server device updates the credit information 131. When the acquisition unit 114 acquires the update information (Yes in step S202), the acquisition unit 114 calculates a difference between credit information stored in an external device and the credit information 131 stored in the storage unit 130, acquires credit information corresponding to the difference from the external device, and causes the credit information in addition to current credit information 131 to be stored in the storage unit 130 (step S204). When the update information is not acquired (No in step S202), the control unit 110 returns to the process of step S200. Accordingly, the control unit 110 can update the credit information 131 in a period in which no ongoing monitoring management is performed. As a result, the determination unit 116 can perform determination using the updated credit information 131 of the credit information 131 used in a previous determination process in a next scheduled determination process at the time of ongoing monitoring management.

On the other hand, when a current date and time is the time at which a determination process is performed (Yes in step S200), the determination unit 116 determines whether a credit (creditability) of a store indicated by the merchant basic information 132 is sufficient for the person in charge of operating the terminal device 10 on the basis of the determination conditions 146 and the credit information 131 in the same manner as in the determination process at the time of newly registering a merchant described above (step S206). Next, the determination unit 116 causes the determination result 148 to be stored in the storage unit 130 in correlation with the merchant basic information representing a store subject to determination (a store subject to screening) (step S208).

Next, the determination unit 116 determines whether a credit (creditability) of a store subject to screening is sufficient (step S210). The control unit 110 ends the process of the present flowchart when a credit (creditability) of a store subject to screening is sufficient (Yes in step S210).

On the other hand, when a credit (creditability) of a store subject to screening is not sufficient (No in step S210), the output control unit 112 causes the communication interface 102 to transmit information (hereinafter, referred to as "alarm information") including the merchant basic information 132 indicating a store subject to screening and the determination result 148 to the terminal device 10 which is a transmission source of determination request information (step S212). Then, the output control unit 112 transmits input screen information which receives an input of a determination period to the terminal device 10 by controlling the communication interface 102 (step S214). As a result, the determination device 100 can cause the person in charge to change a determination period set at the time of registering a new merchant when a credit (creditability) of a store is determined not to be sufficient by a determination process at the time of ongoing monitoring.

Next, the acquisition unit 114 determines whether a determination period has been acquired from the terminal device 10 (step S216). When a determination period has been acquired from the terminal device 10 (Yes I step S216), the acquisition unit 114 rewrites the determination period to the input period (step S218). On the other hand, the acquisition unit 114 causes the determination period set at the time of registering a new merchant to be held in the storage unit 130 (step S220) when a determination period is not acquired from the terminal device 10 (No in step S216). This ends the process of the present flowchart.

According to the determination device 100, the determination method, and the determination program of the first embodiment described above, the acquisition unit 114 for acquiring the credit information 131, the storage unit 130 for storing the determination conditions 146, and the determination unit 116 for determining whether the credit information 131 acquired by the acquisition unit 114 satisfies the determination conditions 146 stored in the storage unit 130 are included, and thereby it is possible to reduce a burden on the person in charge of performing a screening.

In addition, according to the determination device 100, the determination method, and the determination program of the first embodiment, a setting history of the determination conditions 146 is stored in the storage unit 130 for each terminal device 10, the determination conditions 146 which were used last time are set as initial conditions, and a setting with a highest frequency of use is set as an initial condition in a setting history stored in the storage unit 130, and thereby it is possible to automatically set the determination conditions 146 without receiving an input from the person in charge of performing a screening. As a result, the determination device 100 can save time and labor for an input by the person in charge.

In addition, according to the determination device 100, the determination method, and the determination program of the first embodiment, a determination result 148 in which it cannot be determined whether a credit (creditability) of a store subject to screening is sufficient or insufficient and superiority or inferiority cannot be mechanically clarified is sent to the terminal device 10, and thereby it is possible to prompt a person in charge to make a determination for a store in which superiority or inferiority cannot be determined.

Moreover, according to the determination device 100, the determination method, and the determination program of the first embodiment, since a determination process for ongoing monitoring is performed on the basis of the determination conditions 146 set once, screening according to experience or intuition which tended to be performed by a person in charge in the past is no longer performed, and it is possible to provide consistent screening results.

### (Second embodiment)

Hereinafter, a determination device 100A according to a second embodiment will be described. Here, regarding a difference from the first embodiment, a case in which a control unit 110A includes a decision unit 118 will be described. Hereinafter, a description of functions and the like in common with respect to those in the first embodiment described above will be omitted.

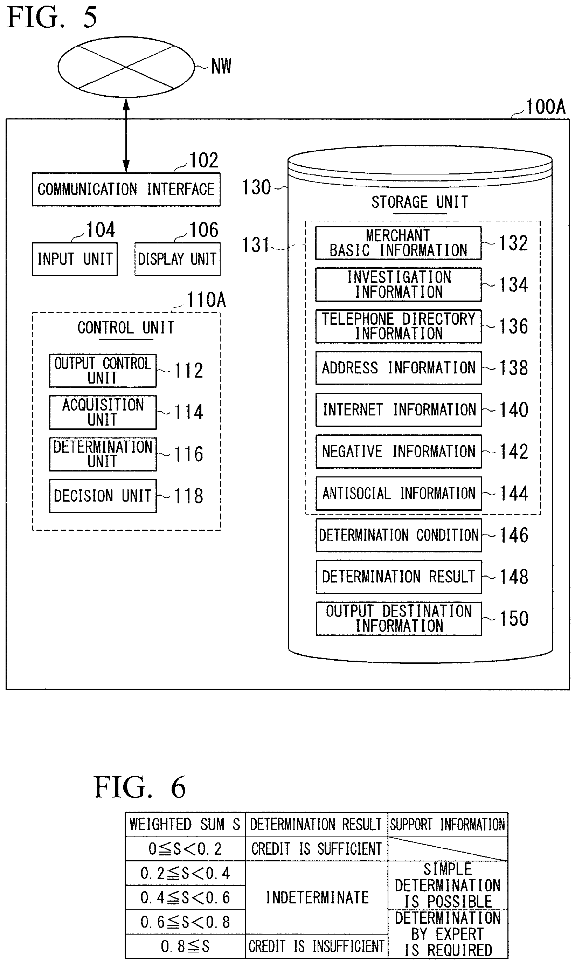

Fig. 5 is a diagram which shows an example of a functional configuration of the determination device 100A according to the second embodiment.

In the second embodiment, the control unit 110A includes an output control unit 112, an acquisition unit 114, a determination unit 116, and the decision unit 118. The decision unit 118 decides a determination period on the basis of a determination result 148 or credit information 131. For example, the decision unit 118 may decide a determination period on the basis of a business type or the number of years since establishment of a store subject to screening, which is included in the credit information 131, in a process at the time of registering a new merchant. More specifically, the decision unit 118, for example, may decide that a determination period is to be one year when a store subject to screening is a beauty shop, and decide the determination period to be three years when the store subject to screening is a restaurant. In addition, the decision unit 118, for example, decides the determination period to be six months when the number of years since establishment of the store subject to screening is less than one year. The numerical examples described above are merely examples and the setting is arbitrary.

In addition, for example, the decision unit 118 may also decide a determination period on the basis of the number of years of being a merchant in the process at the time of ongoing monitoring. More specifically, the decision unit 118 may lengthen a determination period for stores which have been merchants for longer years, and shorten a determination period for stores which have been merchants for shorter years. Accordingly, the determination device 100A can reduce the frequency of ongoing monitoring for good stores which have cleared screenings performed for each determination period over many years. As a result, the determination device 100A can reduce the burden on the person in charge of performing a screening.

In addition, for example, the decision unit 118 may decide a determination period on the basis of the number conditions of various types included in the determination result 148 matching the credit information 131 in the process at the time of newly registering a merchant or the process at the time of ongoing monitoring. More specifically, the decision unit 118, for example, may shorten the determination period as the number of matched conditions increases, and lengthen the determination period as the number of matched conditions decreases.

As a result, the determination device 100A can reduce the frequency of performing ongoing monitoring for stores likely to be determined to have a sufficient credit (creditability). As a result, the determination device 100A can reduce the burden of the person in charge of performing a screening.

In addition, when a determination period is acquired from the terminal device 10 by the acquisition unit 114, the decision unit 118 may change the determination period acquired by the acquisition unit 114 to the decided determination period. Moreover, the decision unit 118 may control the output control unit 112 to stop the process of transmitting input screen information for acquiring a determination period to the terminal device 10. In this case, the determination device 100A automatically decides a determination period without acquiring the determination period from the terminal device 10. Therefore, a person in charge does not need to input a determination period to the terminal device 10. As a result, the determination device 100A can further reduce the burden on a person in charge of performing a screening.

### (Third embodiment)

Hereinafter, a determination device 100 B of a third embodiment will be described. Here, regarding a difference from the first and second embodiments, a case in which each of the determination conditions 146 is weighted will be described. Hereinafter, description of functions and the like which are in common with respect to those in the first and second embodiments described above will be omitted.

For example, weighting for the determination conditions 146 may be performed in accordance with setting by a person in charge, and a condition determined to be important by the person in charge may be given a large weighting factor. The determination unit 116 calculates a weighted sum S of weighted values under a matched condition when each of the determination conditions 146 is weighted, and determines whether a credit (creditability) of a store subject to screening is sufficient on the basis of the calculated weighted sum S.

Fig. 6 is a diagram which shows an example of a determination result determined by the determination unit 116 in the third embodiment. In the example of Fig. 6, for example, four levels of threshold value are provided with respect to the weighted sum S. The determination unit 116 determines that a credit (creditability) of a store subject to screening is sufficient when the calculated weighted sum S is 0 or more and less than 0.2. In addition, the determination unit 116 determines that the credit (creditability) of a store subject to screening is not sufficient, for example, when the calculated weighted sum S is 0.8 or more. Moreover, the determination unit 116 determines that the credit (creditability) of a store subject to screening is indeterminate, for example, when the calculated weighted sum S is 0.2 to 0.8. As a result, the determination device 100 can execute a determination process in consideration of an intention of a person in charge.

In addition, as shown in Fig. 6, the output control unit 112 may transmit support information to the terminal device 10 in accordance with the determination result 148 of the determination unit 116. The support information is information for assisting a person in charge in determining the determination result 148. For example, the output control unit 112 may transmit information indicating that determination is possible even by those who do not have expert knowledge to the terminal device 10 as support information when the weighted sum S calculated by the determination unit 116 is 0.2 or more and less than 0.6. In addition, for example, the output control unit 112 may transmit information indicating that determination by those who have expert knowledge is necessary to the terminal device 10 as support information when the weighted sum S calculated by the determination unit 116 is 0.6 or more. Accordingly, the determination device 100B can notify a person in charge of performing screening of a degree of difficulty related to screening of the determination result 148 determined to be indeterminate. As a result, the person in charge can determine whether screening is possible regardless of the existence or not of expert knowledge.

### (Other embodiments)

Hereinafter, other embodiments (modifications) will be described.

A portion or all of functional units corresponding to each of the control unit 110 and the control unit 110A of the embodiments described above may also be included in the terminal device 10. In addition, some or all of the credit information 131 stored in the storage unit 130 may also be stored in a storage unit which is not shown in the terminal device 10.

In addition, in the first to third embodiments described above, it is possible to make a determination even if it is determined that some (or all) of the credit information 131 to be referred to for the determination conditions 146 is absent. However, then the output determination result 148 may not be reliable data for a person in charge. For this reason, the determination devices 100, 100A, and 100B determine whether various types of information (134 to 144) to be referred to for each of the determination conditions 146 exists, and outputs an error when corresponding information does not exist. The determination devices 100, 100A, and 100B may count output errors and output information indicating that determination accuracy is low if the number of errors is equal to or greater than a threshold value. As a result, the determination devices 100, 100A, and 100B can prompt a person in charge to set appropriate determination conditions 146.

In addition, some or all of the credit information 131 stored in the storage unit 130 may also be stored in an external device such as a server device. In this case, the determination devices 100, 100A, and 100B access an external device via the network NW and perform a determination process with reference to the credit information 131 stored in the external device.

In addition, the control units 110 and 110A may also store a setting history of determination conditions set by a person in charge of another acquirer C in the storage unit 130. In this case, the control units 110 and 110A may also decide the determination conditions set by the person in charge of another acquirer C as initial conditions when there is no input of the determination conditions 146. For example, even when a person in charge does not have know-how at the time of screening and determination conditions cannot be appropriately set, the determination devices 100, 100A, and 100B can appropriately set the determination conditions 146 by using a setting history of another determination condition. As a result, the determination devices 100, 100A, and 100B can facilitate new entry of other companies as an acquirer.

The process of the determination devices 100, 100A, and 100B in the embodiments described above can also be realized by a computer. In this case, the process may be realized by recording a program for realizing this function in a computer-readable recording medium and causing a computer system to read and execute the program recorded in this recording medium. "Computer system" herein includes hardware such as an OS and peripheral devices.

In addition, "computer-readable recording medium" refers to a portable medium such as a flexible disk, a magneto-optical disk, a ROM, or a CD-ROM, or a storage device such as a hard disk embedded in the computer system. Furthermore, "computer-readable recording medium" may include a medium which holds a program dynamically for a short period of time such as a communication line for transmitting a program via a network like the Internet and the like or a communication line like a telephone line and the like, and a medium which holds a program for a certain period of time such as a volatile memory inside a computer system serving as a server or a client in this case. Moreover, the program may be a program for realizing a portion of the functions described above, a program capable of realizing the functions described above in combination with a program already recorded in the computer system, or a program realized by using a programmable logic device such as a field programmable gate array (FPGA).

The embodiments of the present invention have been described in detail with reference to drawings, but a specific configuration is not limited to the embodiments and includes a design and the like within a scope not departing from the gist of the invention.

### [Reference Symbols]

- 1: Merchant screening system
- 10: Terminal device
- 100, 100A, 100B: Determination device
- 102: Communication interface
- 104: Input unit
- 106: Display unit
- 110, 110A: Control unit
- 112: Output control unit
- 114: Acquisition unit
- 116: Determination unit
- 118: Decision unit
- 130: Storage unit
- NW: Network

## Claims

1. A determination device comprising:
an acquisition unit configured to acquire credit information on creditability of a merchant store;
a storage unit configured to store one or more determination conditions for determining whether it is possible to approve the merchant store as a creditable merchant store suitable for conducting transactions on credit; and
a determination unit configured to determine whether the credit information acquired by the acquisition unit satisfies the determination condition stored in the storage unit.

2. The determination device according to claim 1,
wherein the credit information includes at least information on a reputation of the merchant store stored in a storage device connected to a network.

3. The determination device according to claim 1 or 2, further comprising a decision unit configured to decide a timing at which a process of the determination is performed by the determination unit on a basis of a determination result of the determination unit or the credit information,
wherein the determination unit performs a determination process in accordance with a timing decided by the decision unit.

4. The determination device according to claim 3,
wherein the acquisition unit acquires determination cycle information including a timing at which a process of the determination is performed by the determination unit,
the determination unit performs a determination process in accordance with a timing included in determination cycle information acquired by the acquisition unit, and
the decision unit decides a timing at which a next determination process is performed by the determination unit on a basis of a determination result of the determination unit or credit information acquired by the acquisition unit.

5. The determination device according to any one of claims 1 to 4,
wherein the determination unit determines a degree of the creditability of the merchant store on a basis of the number of pieces of the credit information satisfying the determination conditions.

6. The determination device according to claim 5,
wherein the determination conditions are plural and weighted values are assigned correspondingly to each of the determination conditions , and
the determination unit determines a degree of the creditability of the merchant store on a basis of a weighted sum of the weighted values of the determination conditions satisfied by the credit information.

7. The determination device according to any one of claims 1 to 6, further comprising an output unit configured to output a determination result of the determination unit to a terminal device of an acquirer conducting a transaction according to the credit information when the determination unit determines that the credit information does not satisfy the determination conditions.

8. A determination method comprising:
acquiring credit information concerning creditability of a merchant store;
storing, in a storage unit, one or more determination conditions for determining whether it is possible to approve the merchant store as a creditable merchant store suitable for conducting transactions on credit; and
determining whether the credit information satisfies the determination condition stored in the storage unit.

9. A determination program causing a computer to execute steps, the steps comprising:
a step of acquiring credit information on creditability of a merchant store;
a step of storing, in a storage unit, one or more determination conditions for determining whether it is possible to approve the merchant store as a creditable merchant store suitable for conducting transactions on credit; and
a step of determining whether the credit information satisfies the determination condition stored in the storage unit.
